# EUROPEAN PATENT SPECIFICATION

(11) **EP 2 481 769 B1**
(45) Date of publication and mention of the grant of the patent: **04.03.2015**
(21) Application number: 11193056.6
(22) Date of filing: 12.12.2011
(51) Int. Cl.: C08J 7/12, A47J 36/04

(54) **Article suitable for contact with foodstuffs and process for realizing the same**
Artikel, der für den Kontakt mit Lebensmitteln geeignet ist und Verfahren zu dessen Herstellung
Article pouvant entrer en contact avec des aliments et son procédé de fabrication

(30) Priority: 14.12.2010 IT MI20102284
(43) Date of publication of application: 01.08.2012
(73) Proprietor: Tescoma S.P.A., 25046 Cazzago San Martino (BS) (IT)
(72) Inventor: Vaculik, Jiri, 25046 CAZZAGO SAN MARTINO (BS) (CZ)
(74) Representative: Galassi, Alessandro

(56) References cited:
- EP-A1- 0 629 654
- US-A- 4 764 405
- US-A- 5 147 724
- US-A1- 2002 182 352
- US-A1- 2005 005 956

## Description

### Background of the Invention

The present invention relates to a process for realising an article suitable for contact with foodstuffs, wherein said article is selected from the group consisting of: a chopping board for foodstuffs, a plate, a container for foodstuffs, a cooking container, a steam-cooking container, an egg-cooker, an article of cutlery for foodstuffs, a tool for foodstuffs, a colander, a lid for food containers, an envelope for foodstuffs, a bag for foodstuffs.

The prior art includes various technical solutions for rendering products for food cooking more "non-stick", such as saucepans, frying pans and the like. These technical solutions enable reducing adhesion of the food substances to the products themselves, with the aim of preventing, as far as possible, the food substances from sticking to the products, leading to various drawbacks such as the wasting of a part of the foodstuffs, a partial burning of the substances, and a considerable difficulty in cleaning the products. Some known technical solutions consist in applying, on the product to be used with the foodstuffs, a layer of coating realised with an anti-stick material, specifically researched and formulated such as to prevent sticking of those products which by their very nature tend to attach and adhere to surfaces. The advantages offered by the less wastage of food, a higher quality of the cooked foods.

A known type of coating comprises fluorurated polymers or fluoropolymers, such as for example PTFE (Polytetrafluorethylene), FEP (fluorinated ethylene propylene) and PFA (perfluoroalkoxy) which, combined with other resins and/or stabilising and fluidifying components, enable obtaining various types of coatings for specific uses. Other specific types of known coatings, such as PFOS (perfluorooctane sulphonate), PFOA (perfluorooctanoic acid) and other perfluorinated organic compounds are also widely used in the industrial field and in consumer goods, such as water-repellent coatings, stain-resistant coatings for textiles and mats, oil- and grease waterproof coatings for papers usable with foodstuffs, etc.

Some of the coatings cited above are considered suitable for contact with foodstuffs, even though recent research seem to indicate a potential risk of danger thereof in contact with foodstuffs, especially in the case of deterioration of the coatings themselves.

A further and more recent type of anti-stick coating, of known type and used for example on saucepans and the like, is constituted by ceramic coatings, which offer greater guarantees in terms of compatibility for contact with foodstuffs, but are generally more expensive.

Also known are processes for pre-treating the surfaces to be painted with parts of dry plastic material made of polyethylene or polypropylene, by means of the action of a treatment gas containing fluoride internally of a closed reaction chamber on the parts made of plastic material where the treatment gas chamber on the parts made of plastic material where the treatment gas contains oxygen, in addition to an inert component of the gas. A process of this type is described for example in patent EP0629654.

It is further known from patent US2005005956 a plastic component, destined to be exposed to a washing chamber of a washing machine, which is treated with a fluorine-containing gas mixture for improving the stain resistance and drying performance of the plastic component.

Patent US2002182352 discloses a three-dimensional, multi-layer plastic product that is resistant to damage caused by environmental factors such as heat, chemicals, desiccants, oxygen, and/or weather is disclosed; such multi-layer product includes an engineering resin layer affixed to a commodity resin layer.

Patent US4764405 discloses a method for improving the barrier properties of thermoplastic substrates.

Patent US5147724 discloses plastic objects which are exposed to a gas mixture containing fluorine and a gaseous oxidizing agent, to produce an extremely smooth surface on the objects.

The prior art, as described above, exhibits some drawbacks, among which at least the following should be noted:
- the incompatibility of some of the known coatings with foodstuffs, due to the potential contamination of some foodstuffs, with ensuing danger for people;
- the high cost of some of the coatings, both in economic terms and in terms of energy resources and other resources required for production;
- the environmental impact of some of the known technical solutions, both for production and for elimination;
- the impossibility of increasing the cleanability of some types of plastic surfaces without having to use coatings with other materials;
- the non-applicability of some of the known technical solutions to some types of products made of plastic materials;
- a result which is not always sufficient in terms of cleanability of the coated or treated surfaces.

### Summary of the Invention

In consideration of what is set out above, an aim of the present invention is to make available a process for increasing the cleanability of surfaces made of plastic material of suitable articles for use with foodstuffs, which obviates one or more of the above-indicated limitations, wherein said articles are selected from the group consisting of a chopping board for foodstuffs, a plate, a container for foodstuffs, a cooking container, a steam-cooking container, an egg-cooker, an article of cutlery for foodstuffs, a tool for foodstuffs, a colander, a lid for food containers, an envelope for foodstuffs, a bag for foodstuffs.

A further aim of the present invention is to make available a process for enabling a significant increase in the cleanability of surfaces made of plastic material of said articles which destined for contact with foodstuffs, enabling the surfaces to be cleaned with less use of, or without use of detergent substances.

A further aim of the present invention is to realise a process for increasing the cleanability of surfaces which is simple to actuate, rapid and easy to use.

A further aim of the present invention is to realise a process for increasing the cleanability of surfaces of said articles, while maintaining a full compatibility of the surfaces with the foodstuffs.

A further aim of the present invention is to realise a process for increasing the cleanability of surfaces of said articles without actually cladding the surfaces, but keeping the surfaces as surfaces in contact with the foodstuffs.

A further aim of the present invention is to realise a process for increasing the cleanability of surfaces of said articles which is simple to realise and involves modest costs.

One or more of the above aims are attained by a process according to one or more of the accompanying claims.

In a further aspect, the process further comprises the steps of removing the treatment gas from the reaction chamber and /or removing at least an article or the articles from the reaction chamber after the treatment step.

In a further aspect, during the treatment step a plurality of articles are simultaneously treated.

In a further aspect, the article or the articles are entirely made of plastic material and the treatment of at least a surface is performed simultaneously on a plurality of surfaces of each of the articles.

### Brief Description of the Drawings

Further characteristics and advantages of the present invention will better emerge from the detailed description that follows of at least an embodiment of the invention, illustrated purely by way of non-limiting example, in the accompanying figures of the drawings. The detailed description will be set out in the following with reference to the accompanying figures of the drawings, as described herein below:

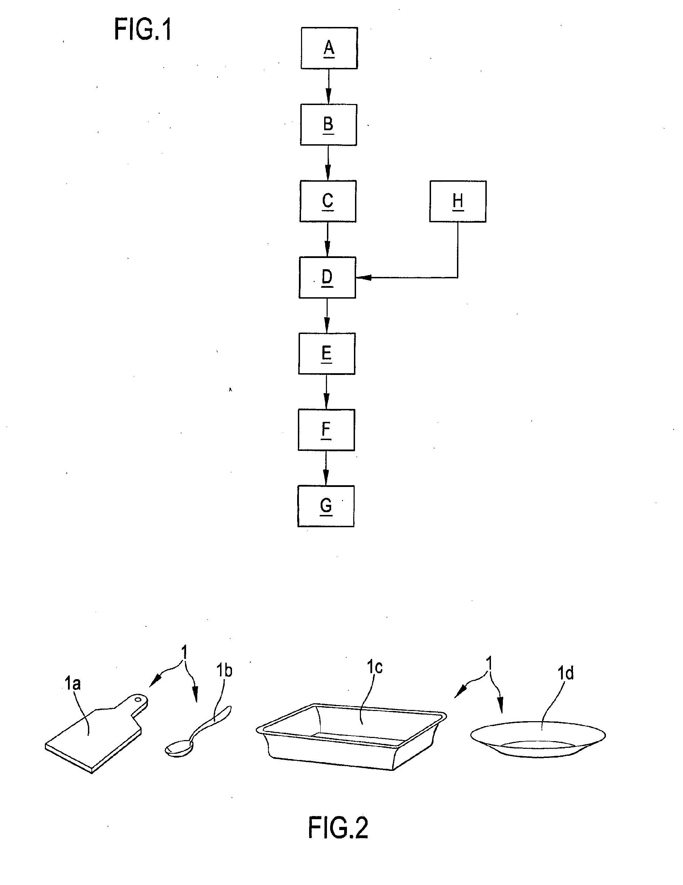

- figure 1 is a flow diagram illustrating an embodiment of a process according to the present invention;
- figure 2 illustrates, by way of example, some examples of suitable articles and destined for contact with foodstuffs and treated by means of a process according to the present invention.

### Detailed Description

The present description relates to an article 1 suitable for contact with foodstuffs. By "suitable for contact with foodstuffs" is meant an article suitable for food use or with foodstuffs, and which therefore does not lead to an possible contamination, deterioration or any other negative effect on the foods themselves when placed in contact there-with. An article is "suitable for contact with foodstuffs" if it conforms to the laws and directives existing in the sector, such as, for example, those at present in power in the European Community, CE rule no. 1935/2004 and subsequent modification or further norms, which establishes the general principles for all materials that can come into contact with foods, and in particular concerning plastic materials, European directive 2002/72/CE and subsequent modifications or further norms.

For example, a contact surface of article 1 or article 1 itself can be made, according to an aspect of the present invention, of polyethylene or polypropylene suitable for food use. An article 1 comprises at least a contact surface made of plastic material suitable and destined for use and direct contact with foodstuffs, in which at least the contact surface is pre-treated with a treatment gas having a composition comprising from 3% to 5% in volume of fluorine, from 10% to 16% in volume of oxygen, and at least a further inert gaseous component. This treatment happens at an absolute pressure of the treatment gas comprised between 333mbar and 400mbar and for a treatment time comprised between about 10 and about 180 seconds.

Following treatment with the treatment gas the contact surface exhibits a cleanability which is greater than the same contact surface before the treatment. In the present text, by the term "cleanability" is meant the ability of a surface to be easily cleanable by means of removal of dirtying substances, for example of the food type, which might have adhered thereto. An increase in cleanability can be correlated to a reduction in the adhesion which the fouling substances exhibit with respect to a surface.

The treated contact surface can be directly exposed to the air in the finished article 1 destined to enter into direct contact with foodstuffs, without interposing of intermediate coatings or enamelling. The contact surface can be subjected to the treatment in a treatment chamber, in which a preliminary step is performed of placing the reaction chamber in depression such as to caused any moisture present at least on the contact surface of the article 1 to evaporate, before treatment with the treatment gas.

The article 1 can be entirely realised in the mentioned plastic material.

The treatment of at least a contact surface can be carried out simultaneously on a plurality of surfaces of the article 1 and/or on the entire external surface of the article 1. The article 1 suitable for contact with foodstuffs can be for example a chopping board for foodstuffs 1 a, a plate 1 d, a container 1 c for foodstuffs, a cooking container, a steam-cooking container, an egg-cooker, an article of cutlery 1b for foodstuffs, a tool for foodstuffs, a colander, a lid for food containers, an envelope for foodstuffs, a bag for foodstuffs, etc.

According to the invention, a process for increasing the cleanability of surfaces made of plastic material 1 suitable for use with foodstuffs, suitable and destined for direct contact with foodstuffs, comprises at least steps of predisposing (A) a reaction chamber for a gas treatment of articles 1; placing (B) in the reaction chamber at least one of the articles 1 having at least a contact surface made of plastic material and being suitable and destined for direct contact with foodstuffs; treating (E) at least the surface of the article 1 in the reaction chamber with a treatment gas, having a composition comprising from 1% to 10% in volume of fluorine, from 7% to 20% in volume of oxygen, and at least a further inert gaseous component, at an absolute treatment gas pressure of between 333 mbar and 400 mbar and for a treatment time comprised between about 10 and about 180 seconds wherein said articles are selected from the group consisting of : a chopping board for foodstuffs, a plate, a container for foodstuffs, a cooking container, a steam-cooking container, an egg-cooker, an article of cutlery for foodstuffs, a tool for foodstuffs, a colander, a lid for food containers, an envelope for foodstuffs, a bag for foodstuffs.

The treatment gas can have a composition comprising from 3% to 5% in volume of fluorine, from 10% to 16% in volume of oxygen, and at least a further inert gaseous component and/or further comprising, before the step of treating E the at least an article 1 or articles 1, a step of placing C the reaction chamber under depression in order to cause any humidity present on the at least an article 1 or on said articles 1 to evaporate and thus be removed.

The process can further comprise the steps of predisposing (H) a supply gas comprising from 5% to 15% in volume, or about 10% in volume, of F₂ and from 95% to 85% in volume, or about 90% in volume, of N₂; bringing the reaction chamber to an absolute pressure of about 200 mbar before the step of treating; and introducing D the supply gas into the chamber for treatment before the stage of treating, such as to bring the absolute pressure in the reaction chamber up to about 400mbar, the quantity of supply gas introduced into the reaction chamber per unit of time being determined such that an increase in pressure in the reaction chamber is comprised between 100mbar/min and 200mbar/min.

The process of the invention is configured such as to make anti-stick and/or to increase the cleanability of articles 1 made of plastic material suitable and destined for use with foodstuffs, for example of the above-described type. The process enables making anti-stick and increasing the cleanability of surfaces made of plastic material of articles 1 made of polyethylene or polypropylene suitable for use with foodstuffs, the surfaces being destined for use with food. The treated surface of the article 1 or the articles 1 is destined to define a finished surface of the finished article 1 or articles 1 and/or to remain exposed to the air in the finished article or articles 1. The process does not comprise any step of cladding or coating of the treated surface of the article 1 or the articles 1.

The process further comprises steps of removing (F) the treatment gas (G) from the reaction chamber after the treatment step. In greater detail, a treatment gas is used at an absolute pressure comprised between 333 and 400 mbar, containing from 3 to 5 percent in volume of fluorine and in addition to at least a further inert component of the gas, and from 10 to 16 percent in volume of oxygen. The action time of the treatment gas is comprised between 10 and 180 seconds and the reaction chamber is at first evacuated up to an absolute pressure of 200 mbar; then a gaseous mixture is added, formed by 10% in volume of F₂ and by 90% in volume of N₂, until the absolute pressure is increased up to 400 mbar.

The quantity in-flowing of the gaseous mixture formed by F₂ and N₂ in the time unit is chosen in such a way that there follows an increase in pressure in the reaction chamber comprised between 100 mbar/min and 200 mbar/min. With this composition of the treatment gas, and with this defined increase of the pressure in the reaction chamber and the necessary flow velocity of the gaseous mixture formed by F₂ and N₂, treatment times are sufficiently brief, thus preventing excessive treatment with fluorine in the parts made of plastic material which are close to the inflow opening of the gaseous mixture. Excessive treatment with fluorine might lead to a deterioration in the properties of the contact surface and/or problems of compatibility with foodstuffs. The oxygen content in the treatment gas is formed autonomously following evacuation at 200 mbar by means of the residual atmosphere, so that the gaseous mixture supplied does not have to contain oxygen. In this way the process is particularly economical as it is easy to commercially source a treatment gas with 10% in volume of F₂ and 90% in volume of N₂. In the case treatment gas with 10% in volume of F₂ and 90% in volume of N₂. In the case of a treatment in the conditions according to the invention, there is an ensuing increase in the cleanability of the treated contact surfaces, maintaining the suitability thereof for contact with foodstuffs, on the parts made of plastic material, so that the process is suitable for pretreatment of articles 1 suitable for contact with foodstuffs.

Before the action of the treatment gases containing fluorine, the reaction chamber containing the articles 1 made of plastic material to be treated can be evacuated with the aim of evaporating the moisture on the parts made of plastic material.

In this way optimum drying is obtained from the economical point of view of the parts made of plastic material to be treated, as it is not necessary to predispose separate drying chambers upstream of the treatment chamber. The depression necessary in the chamber is a function of the temperature inside it and in practice can be about 23 mbar.

To perform the drying operation of the invention, the pieces of plastic material are arranged in the reaction chamber and the chamber is evacuated. Only when all the moisture has evaporated is the treatment gas introduced and therefore the fluorine treatment operation.

The invention provides important advantages and obviates some of the drawbacks in the prior art.

A process according to the invention enables a significant increase in the cleanability of the surfaces made of plastic material of articles suitable for and destined for contact with foodstuffs, and enables the articles to be cleaned even with hot water only and without the use of detergent substances.

It is further of significance that the process of the invention enables reducing the use of detergent substances and for this reason offers considerable advantages in terms of eco-compatibility.

Further, the process of the invention is simple and quick to actuate and therefore provides good productivity. Further, a process as in the invention is applicable to various types of products made of plastic material that are suitable and destined for use with foodstuffs and guarantees a high level of compatibility of those surfaces with foodstuffs, without requiring coatings of the surfaces themselves.

A final observation is that a process such as that of the invention is simple to actuate and relatively economical to perform.

## Claims

1. A process for increasing cleanability of surfaces of plastic material of articles (1) suitable for use with foodstuffs, aimed at and destined for direct contact with foodstuffs, and which therefore does not lead to contamination, deterioration or other negative effect on the foods themselves, the process comprising at least the steps of:
arranging (A) a reaction chamber for a gas treatment of said articles (1);
placing at least one of said articles (1) in said reaction chamber, the article (1) having at least a contact surface made of plastic material and being suitable and intended for direct contact with foodstuffs;
treating (E) at least said surface of said article (1) in said reaction chamber with a treatment gas, having a composition comprising from 1 % to 10% in volume of fluorine, from 7% to 20% in volume of oxygen, and at least a further inert gaseous component, at an absolute treatment gas pressure comprised between 333 mbar and 400 mbar and for a treatment time comprised between about 10 and about 180 seconds
wherein said article is selected from the group consisting of: a chopping board for foodstuffs or as a plate or as a container for foodstuffs or as a cooking container or as a steam-cooking container or as an egg-cooker or as an article of cutlery for foodstuffs or as a tool for foodstuffs or as a colander or as a lid for food containers or as an envelope for foodstuffs or as a bag for foodstuffs.

2. The process of the preceding claim, wherein during said step of treating (E) at least said surface of said article (1) in said reaction chamber, said treatment gas has a composition comprising from 3% to 5% in volume of fluorine, from 10% to 16% in volume of oxygen, and at least a further inert gaseous component and/or further comprising, before said step of treating (E) said at least an article (1) or articles (1), a step of putting(C) into depression said reaction chamber in order to cause any possible humidity present on said at least an article (1) or on said articles (1) to evaporate and be removed.

3. The process of claim 1 or 2, further comprising the steps of:
arranging (H) a supply gas comprising from 5% to 15% in volume, or about 10% in volume, of F₂ and from 95% to 85% in volume, or about 90% in volume, of N₂;
bringing, before said step of treating, the reaction chamber to an absolute pressure of about 200 mbar; and
introducing (D) said supply gas into said chamber for treatment, before said step of treating, such as to bring the absolute pressure in said reaction chamber up to about 400mbar, the quantity of supply gas introduced into said reaction chamber per unit of time being determined such that an increase in pressure in said reaction chamber is comprised between 100mbar/min and 200mbar/min.

4. The process of any one of claims 1 to 3, for making anti-stick and/or for increasing the cleanability of articles (1) made of a plastic material aimed at and destined for use with foodstuffs, such as cutting boards (1 a) for foodstuffs and/or plates (1 d) and/or containers (1 c) for foodstuffs and/or containers for cooking and/or containers for steam-cooking and/or egg-cooking containers (1 b) and/or articles of cutlery (1 b) for foodstuffs and/or covers for foodstuffs and/or envelopes for foodstuffs and/or bags for foodstuffs and/or for making anti-stick and increasing cleanability of surfaces made of plastic material of articles (1) made of polyethylene or polypropylene suitable for food use, said surfaces being aimed at and intended for use with foodstuffs.

5. The process of any one of claims 1 to 4, wherein the treated surface of said article (1) or articles (1) is intended to define a finished surface of said finished article (1) or articles (1) and/or to remain exposed to the air in said finished article or articles (1) and/or **characterised in that** it does not comprise any step of cladding or coating of said treated surface of said article (1) or the articles (1).

## Patentansprüche

1. Verfahren zur Erhöhung der Reinigungsfähigkeit von Oberflächen aus Kunststoff von Gegenständen (1) zur Verwendung mit Lebensmitteln, die für den unmittelbaren Kontakt mit Lebensmitteln geeignet und bestimmt sind, welches daher nicht zur Kontamination, zum Verderb oder zu anderen negativen Auswirkungen für die Lebensmittel führt, umfassend mindestens die folgenden Schritte:
Anordnung (A) einer Reaktionskammer für eine Gasbehandlung der benannten Gegenstände (1);
Positionierung von mindestens einer der benannten Gegenstände (1) in der benannten Reaktionskammer, wobei der Gegenstand (1) wenigstens eine Kontaktfläche aus Kunststoff besitzt und für den unmittelbaren Kontakt mit Lebensmitteln geeignet und bestimmt sind;
Behandlung (E) zumindest der benannten Oberfläche des benannten Gegenstandes (1) in der benannten Reaktionskammer mit einem Behandlungsgas, mit einer Zusammensetzung umfassend 1 bis 10 Vol.-% Fluor, 7% bis 20 Vol.-% Sauerstoff, und mindestens einen weiteren inerten gasförmigen Bestandteil, bei einem absoluten Behandlungsgasdruck zwischen 333 mbar und 400 mbar und für eine Behandlungsdauer zwischen etwa 10 und etwa 180 Sekunden,
worin der benannte Gegenstand ausgewählt ist aus der Gruppe umfassend: eine Schneidplatte für Lebensmittel oder eine Platte oder einen Behälter für Lebensmittel oder einen Garbehälter oder einen Dampfgarbehälter oder einen Eierbräter oder eine Schneidware für Lebensmittel oder ein Werkzeug für Lebensmittel oder einen Durchschlag oder einen Deckel für Lebensmittelbehälter oder einen Umschlag für Lebensmittel oder einen Beutel für Lebensmittel.

2. Verfahren nach dem vorherigen Anspruch, worin während des benannten Behandlungsschrittes (E) zumindest der benannten Oberfläche des benannten Gegenstandes (1) in der benannten Reaktionskammer, das benannte Behandlungsgas eine Zusammensetzung besitzt umfassend 3 bis 5 Vol.-% Fluor, 10 bis 16 Vol.-% Sauerstoff, und mindestens einen weiteren inerten gasförmigen Bestandteil und/oder weiter umfassend vor dem Behandlungsschritt (E) des benannten mindestens einen Gegenstandes (1) oder der benannten Gegenstände (1) einen Schritt von Setzen (C) unter Vakuum der benannten Reaktionskammer, um die jeweilige Feuchtigkeit auf dem benannten mindestens einen Gegenstand (1) oder auf den benannten Gegenständen (1) verdampfen zu lassen und zu entfernen.

3. Verfahren nach Anspruch 1 oder 2, weiter umfassend die folgenden Schritte:
Anordnen (H) eines Versorgungsgases umfassend 5 bis 15 Vol.-%, oder etwa 10 Vol.-%, F₂ und 95 bis 85 Vol.-%, oder etwa 90 Vol.-%, N₂;
Anlegen, vor dem benannten Behandlungsschritt, eines Absolutdruckes von etwa 200 mbar an der Reaktionskammer; und
Einführen (D) des benannten Versorgungsgases in die benannte Behandlungskammer, vor dem benannten Behandlungsschritt, um den absoluten Druck in der benannten Reaktionskammer bis zu etwa 400 mbar zu bringen, wobei die Menge des in die benannte Reaktionskammer eingeführten Versorgungsgases pro Zeiteinheit derart bestimmt wird, daß ein Druckanstieg in der benannten Reaktionskammer zwischen 100 mbar/Min. und 200 mbar/Min. liegt.

4. Verfahren nach irgendeinem der Ansprüche 1 bis 3, zur Übertragung von Antihaft-Eigenschaften und/oder Erhöhung der Reinigungsfähigkeit von Gegenständen (1) aus Kunststoff zur Verwendung mit Lebensmitteln, beispielsweise Schneidplatten (1a) für Lebensmittel und/oder Platten (1d) und/oder Behältern (1c) für Lebensmittel und/oder Garbehältern und/oder Dampfgarbehältern und/oder Eierbratbehältern (1b) und/oder Schneidwaren (1b) für Lebensmittel und/oder Deckeln für Lebensmittel und/oder Umschlägen für Lebensmittel und/oder Beuteln für Lebensmittel und/oder zur Übertragung von Antihaft-Eigenschaften und zur Erhöhung der Reinigungsfähigkeit von Oberflächen aus Kunststoff von Gegenständen (1) aus Polyethylen oder Polypropylen zur Verwendung mit Lebensmitteln, wobei die benannten Oberflächen zur Verwendung mit Lebensmitteln geeignet und bestimmt sind.

5. Verfahren nach einem der Ansprüche 1 bis 4, worin die behandelte Oberfläche des Gegenstandes (1) oder der Gegenstände (1) dazu bestimmt ist, eine fertige Oberfläche des benannten fertigen Gegenstandes (1) oder der Gegenstände (1) zu definieren und/oder im benannten fertigen Gegenstand oder in den Gegenständen (1) der Luft ausgesetzt zu bleiben und/oder **dadurch gekennzeichnet, daß** es keinen Schritt von Verkleidung oder Beschichtung der benannten behandelten Oberfläche des benannten Gegenstandes (1) oder der Gegenstände (1) umfasst.

## Revendications

1. Procédé pour augmenter la nettoyabilité de surfaces en matière plastique d'articles (1) aptes à être utilisés avec les aliments, visant et destinés au contact direct avec les aliments en ne causant donc pas la contamination, la détérioration ou d'autres effets négatifs sur les aliments mêmes, le procédé comprenant au moins les étapes suivantes:
agencement (A) d'une chambre de réaction pour un traitement au gaz desdits articles (1);
positionnement d'au moins un desdits articles (1) dans ladite chambre de réaction, l'article (1) ayant au moins une surface de contact en matière plastique et étant apte et destiné au contact direct avec les aliments;
traitement (E) d'au moins ladite surface dudit article (1) dans ladite chambre de réaction avec un gaz de traitement, ayant une composition comprenant de 1% à 10% en volume de fluor, de 7% à 20% en volume d'oxygène, et au moins un composant gazeux inerte supplémentaire, sous une pression absolue de gaz de traitement comprise entre 333 mbar et 400 mbar et pour une durée de traitement comprise entre environ 10 et environ 180 secondes,
où ledit article est choisi dans le groupe comportant: une planche à découper pour des aliments ou une plaque ou un récipient à aliments ou un récipient de cuisson ou un récipient de cuisson vapeur ou un cuiseur à oeuf ou un article de coutellerie pour des aliments ou un outil pour des aliments ou un passoir à légumes ou un couvercle pour des récipients à aliments ou une enveloppe à aliments ou un sac à aliments.

2. Procédé selon la revendication précédente, où pendant ladite étape de traitement (E) d'au moins ladite surface dudit article (1) dans ladite chambre de réaction, ledit gaz de traitement présente une composition comprenant de 3% à 5% en volume de fluor, de 10% à 16% en volume d'oxygène, et au moins un composant gazeux inerte supplémentaire et/ou comprenant en outre, avant ladite étape de traitement (E) dudit au moins un article (1) ou desdits articles (1), une étape de placement (C) sous vide de ladite chambre de réaction afin de provoquer l'évaporation et l'élimination de toute humidité présente sur ledit au moins un article (1) ou sur lesdits articles (1).

3. Procédé selon la revendication 1 ou 2, comprenant en outre les étapes suivantes:
agencement (H) d'un gaz d'alimentation comprenant de 5% à 15% en volume, soit environ 10% en volume, de F₂ et de 95% à 85% en volume, soit environ 90% en volume, de N₂;
mise, avant ladite étape de traitement, de la chambre de réaction sous une pression absolue d'environ 200 mbar; et
introduction (D) dudit gaz d'alimentation dans ladite chambre de traitement, avant ladite étape de traitement, de façon à amener la pression absolue dans ladite chambre de réaction jusqu'à environ 400 mbar, la quantité de gaz d'alimentation introduit dans ladite chambre de réaction par unité de temps étant déterminée de telle sorte qu'une augmentation de la pression dans ladite chambre de réaction soit comprise entre 100 mbar/min et 200 mbar/min.

4. Procédé selon l'une quelconque des revendications 1 à 3, pour rendre anti-adhérents et/ou pour augmenter la nettoyabilité d'articles (1) en matière plastique visant et destinés à être utilisés avec des aliments, tels que des planches à découper (1a) pour des aliments et/ou des plaques (1d) et/ou des récipients (1c) à aliments et/ou des récipients de cuisson et/ou des récipients de cuisson vapeur et/ou des récipients de cuisson pour oeufs (1b) et/ou des articles de coutellerie (1b) pour des aliments et/ou des couvercles pour des aliments et/ou des enveloppes à aliments et/ou des sacs à aliments et/ou pour rendre anti-adhérentes et/ou pour augmenter la nettoyabilité de surfaces en matière plastique d'articles (1) en polyéthylène ou polypropylène à usage alimentaire, lesdites surfaces visant et étant destinées à être utilisées avec des aliments.

5. Procédé selon l'une quelconque des revendications 1 à 4, dans lequel la surface traitée dudit article (1) ou desdits articles (1) est destinée à définir une surface finie dudit article fini (1) ou desdits articles (1) et/ou à rester exposée à l'air dans ledit article ou lesdits articles (1) et/ ou **caractérisé en ce qu'**il ne comporte aucune étape de placage ou de revêtement de ladite surface traitée dudit articles (1) ou desdites articles (1).
